(19) Europäisches Patentamt / European Patent Office / Office européen des brevets

(11) **EP 4 763 410 A1**

(12) **EUROPEAN PATENT APPLICATION**

(43) Date of publication:
24.06.2026 Bulletin 2026/26

(21) Application number: 25211774.2

(22) Date of filing: **28.10.2025**

(51) International Patent Classification (IPC):
**B23K 35/02** (2006.01)  **B23K 35/26** (2006.01)
**C22C 11/10** (2006.01)  **C22C 13/02** (2006.01)

(52) Cooperative Patent Classification (CPC):
**B23K 35/025; B23K 35/0244; B23K 35/262;
B23K 35/264; C22C 11/10; C22C 13/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **19.12.2024 JP 2024224523**

(71) Applicant: **Senju Metal Industry Co., Ltd.**
**Tokyo 120-8555 (JP)**

(72) Inventors:
• **MATSUFUJI, Takahiro**
**Tokyo, 120-8555 (JP)**
• **ASUKE, Kaito**
**Tokyo, 120-8555 (JP)**
• **YOSHIKAWA, Shunsaku**
**Tokyo, 120-8555 (JP)**

(74) Representative: **Zimmermann & Partner**
**Patentanwälte mbB**
**P.O. Box 330 920**
**80069 München (DE)**

(54) **SOLDER ALLOY, SOLDER PASTE, SOLDER BALL, AND SOLDER JOINT**

(57)     Provided are a solder alloy, a solder paste, a solder ball, and a solder joint which have a low melting point, are excellent in ductility, shear strength, and heat cycle resistance, further suppress the occurrence of open defects, and in addition, have reduced residual voids even at the time of joining in a large area. A solder alloy has an alloy composition consisting of, by mass%, Bi: 35.0 to 68.0%, Sb: 0.1 to 2.0%, Ni: 0.010 to 0.050%, Ge: 0.007 to 0.090%, with the balance being Sn. Preferably, the alloy composition further contains, by mass%, at least one of Co, Ti, Al, Mn, As, Fe, Pd, Zn, Zr, Pb, In, Ce, P, and Ga: 0.1% or less in total. Further, this solder alloy can be suitably used for solder pastes, solder balls, and solder joints.

EP 4 763 410 A1

## Description

Technical Field

The present invention relates to a solder alloy, a solder paste, a solder ball, and a solder joint having a low melting point.

Background Art

In recent years, electronic devices such as CPU (Central Processing Unit) have been required to be downsized. With the progress of downsizing of electronic devices, a thermal load at the time of soldering increases, and defects such as warpage of a board occur, so that soldering at a low temperature is desired. A lower soldering temperature will enable manufacturing of a highly reliable circuit board. For soldering at a low temperature, a solder alloy having a low melting point must be used.

Examples of the solder alloy having a low melting point include Sn-58Bi and Sn-52In as disclosed in JIS Z 3282 (2017). These alloys have melting temperatures of respectively 139°C and 119°C, and both have alloy compositions representing solders with low melting points. In particular, Sn-58Bi is widely used as a solder alloy having low cost and at the same time, having excellent wettability.

However, since the Bi phase is hard and brittle, the mechanical characteristics of the solder alloy are deteriorated. When distortion or stress is generated in the board due to a thermal cycle or a drop impact, the solder alloy portion may be broken. Therefore, various solder alloys have been studied in order to suppress an increase in the melting point and also improve the reliability of the solder joint.

For example, Patent Document 1 reviews a solder alloy having a low melting point, as well as improved ductility and shear strength, and further, excellent heat cycle resistance property. The solder alloy described in this document is a Sn-Bi-Sb-Ni solder alloy in which Sb and Ni are added to a Sn-Bi solder alloy.

Further, Patent Document 1 describes that an alloy structure becomes fine due to a synergistic effect of Sb and Ni, and ductility, shear strength, and heat cycle resistance are simultaneously exhibited. Moreover, Patent Document 1 discloses that Ge may be added as an element that suppresses oxidation of Sn and further improves wettability.

Citation List

Patent Document

Patent Document 1: Japanese Patent Publication No. 6477965

Summary of Invention

Technical Problem

As described above, the solder alloy described in Patent Document 1 is a very excellent solder alloy that can simultaneously exhibit ductility, shear strength, and heat cycle resistance with one alloy composition, and even more, can also improve suppression of oxidation and wettability. However, in the last several years, the board has been thinned due to the increase in the number of layers, and further, the package has been increased in size, so that defects caused by warpage of the board due to heating during solder bonding have occurred again.

Therefore, in a stage where the heating temperature rises from room temperature to reach the mounting peak temperature or in a stage where the board is cooled from the peak temperature, PKG (Package) such as BGA (Ball Grid Array) or LGA (Land Grid Array) mounted on the board is bent due to a difference in thermal expansion coefficient or rigidity of each material constituting the inside of PKG, and deviates from a position at the time of mounting. Along with this, a tear phenomenon occurs in which the electrode of the board and the electrode of the PKG are solidified in a state of being separated from each other more than the initial interval, and at that time, a minute gap is generated such that the molten portion of the solder alloy constituting the solder joint is torn. When only the tear phenomenon occurs, the solder joint maintains an electrically connected state, so that the function as the solder joint is exhibited.

However, when the tear phenomenon progresses, an open defect occurs in which the solder joint is solidified while being separated during melting. An open defect leads to loss of electrical connection of the solder joint and becomes a fatal defect.

In addition, as described above, Patent Document 1 contains Ge in order to improve wettability. Here, the wettability between the board and the molten solder alloy locally suppresses generation of voids due to the improved wettability. However, when a large component such as a heat sink and the board are bonded to each other, generation of voids cannot be sufficiently suppressed only by local void suppression based on improvement in wettability.

Additionally, Patent Document 1 describes that the fluidity of the molten solder alloy is not inhibited unless an optional element such as Ge is contained in an amount more than 0.1%. When the molten solder alloy has good fluidity, it is expected that generated voids are likely to be released to the outside. The generation of voids may result in their entrapment when a component is mounted on a board due to deterioration of wettability, but in the case of using a solder paste, voids may be generated due to the component. In this case, even if the molten solder alloy has fluidity, voids may not be completely released.

Even a very excellent solder alloy capable of exhibiting a plurality of effects with one alloy composition, such as the solder alloy described in Patent Document 1, needs to be appropriately improved according to a change in technical trends. In addition, further, there is a demand for an excellent solder alloy capable of solving a new problem while maintaining various effects that can be exhibited by a conventional solder alloy.

In particular, many studies have conventionally been conducted on Ge as an element exhibiting an oxidation suppressing effect, including Patent Document 1. The liquid physical properties of the Sn-Bi based solder alloy in a molten state affect the solidified shape, etc., making it even more difficult to achieve stable control in atmospheric environment mounting. In order to enhance the mounting quality of the joint portion using the Sn-Bi based low-temperature solder alloy, it is desirable that the solid physical properties have an effect of enhancing the reliability as in the solder alloy described in Patent Document 1, and at the same time, the liquid is also suitable for the mounting process and has an effect of improving the bonding quality. However, a technique and guidelines for achieving both of these have not been sufficiently studied.

An object of the present invention is to provide a solder alloy, a solder paste, a solder ball, and a solder joint which have a low melting point, are excellent in ductility, shear strength, and heat cycle resistance, further suppress the occurrence of open defects, and in addition, have reduced residual voids even at the time of joining in a large area.

Solution to Problem

The present inventors have paid attention to the Sn-Bi-Sb-Ni-Ge solder alloy disclosed in Patent Document 1 that exhibits an effect of improving the bonding quality by being compatible with the mounting process even as a liquid. In addition, as a result of studying the cause of the existence of an alloy composition that causes an open defect when warpage occurs in a thin board, it has been found that when the oxidation state of the surface of the molten solder alloy becomes unstable, an open defect occurs due to the progress of a tear phenomenon from a liquid phase portion in a case where the alloy is entirely in a liquid phase or in a mixed state of a solid phase and a liquid phase.

In view of these, in order to increase the stable oxide film on the surface of the molten solder alloy, it may be better to increase the Ge content. However, it has been found that at the time of a high content of Ge, open defects are curbed, but there is an alloy composition in which a large amount of voids are generated when a solder joint is formed using a paste printed over a wide area. This is presumed to be because when a thick oxide film of Ge is generated, the active component in the flux constituting the paste is preferentially consumed for the reduction of the oxide film, and as a result of the subsequent reduction of the electrode, a large amount of voids are generated at the bonding interface.

Therefore, the present inventors have found that it is necessary to accurately control the Ge content to be within a predetermined range by focusing on the Ge content. However, in the Sn-Bi-Sb-Ni-Ge solder alloy, it has been found that a sufficient effect cannot be obtained if only the Ge content is controlled.

In order to prevent the occurrence of open defects even when the Ge content is reduced, it has also been found that the occurrence of open defects can be suppressed due to the reduction of the Ge content by precisely controlling the Bi and Ni contents in addition to Ge.

In obtaining this finding, the present inventors have focused on the point that when the surface state of the molten solder alloy is stable, the occurrence of open defects due to the progress of the tear phenomenon can be suppressed. Then, assuming that the droplet of the molten solder alloy is stably retained as long as the surface state is stabilized, the droplet retainability of the molten solder alloy was evaluated. As a result, it has also been found that a solder alloy having a droplet retainability, which is an index for stably retaining droplets, tends to be capable of suppressing the occurrence of open defects.

Furthermore, in order to sufficiently suppress voids that can be generated in a solder joint having a large area by Ge being contained to some extent, it has also been found that generation of voids can be sufficiently suppressed when the Sb content is within a predetermined range in addition to the Bi, Ni, and Ge contents. In addition, it has also been found that the Sn-Bi-Sb-Ni-Ge solder alloy exhibiting these effects has a low liquidus-line temperature and is also excellent in ductility, shear strength, and heat cycle resistance, similarly to the conventional solder alloy.

The present invention obtained by these findings is as follows.

(0) A solder alloy consisting of, by mass%, Bi: 35.0 to 68.0%, Sb: 0.1 to 2.0%, Ni: 0.010 to 0.050%, Ge: 0.007 to 0.090%, with the balance being Sn.

(1) A solder alloy having an alloy composition consisting of, by mass%, Bi: 35.0 to 68.0%, Sb: 0.1 to 2.0%, Ni: 0.010 to 0.050%, Ge: 0.007 to 0.090%, with the balance being Sn.

(2) The solder alloy according to (0) or (1) above, wherein the alloy composition (solder alloy) further comprises, by mass%, at least one of Co, As, Fe, Pd, Zr, Pb, Ce, and P: 0.1% or less in total.

(3) The solder alloy according to (0) or (1) above, wherein the alloy composition (solder alloy) further comprises, by mass%, at least one of Co, Ti, Al, Mn, As, Fe, Pd, Zn, Zr, Pb, In, Ce, P, and Ga: 0.1% or less in total.

(4, 8) The solder alloy according to any one of (0) to (3) above, wherein the alloy composition (solder alloy) satisfies the following Relations (1) and (2):

$$0.0008 \leqq Bi \times Sb \times Ni \times Ge \leqq 0.0347 \qquad \text{Relation (1)}$$

$$34.7 \leqq (Bi \times Ni)/Ge \leqq 154.6 \qquad \text{Relation (2)}$$

wherein Bi, Sb, Ni, and Ge in the Relations (1) and (2) above each represent the content as mass% thereof in the solder alloy.

(5) A solder paste comprising the solder alloy according to any one of (0) to (3).

(6) A solder ball consisting of the solder alloy according to any one of (0) to (3).

(7) A solder joint comprising the solder alloy according to any one of (0) to (3).

Brief Description of Drawings

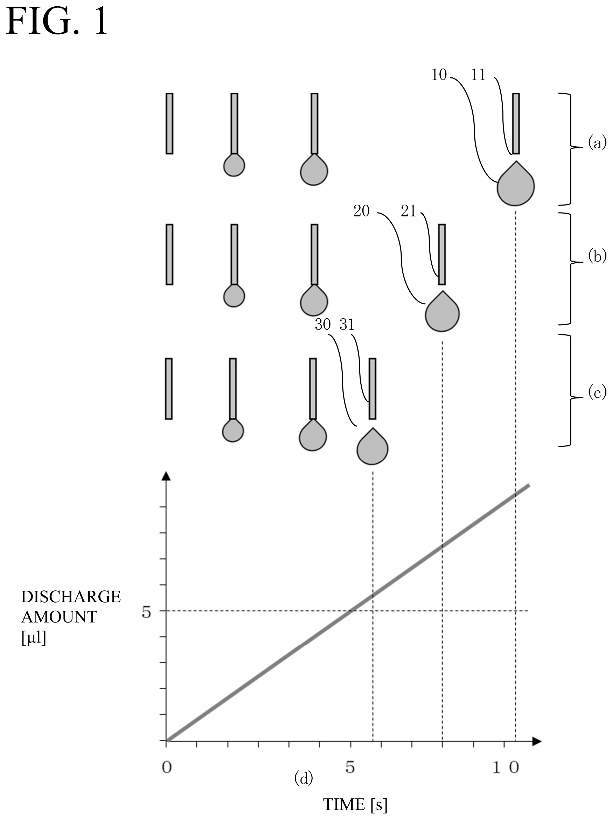

FIG. 1 is a schematic view showing a method for evaluating droplet retainability, FIG. 1(a) is a schematic view showing a discharge state which is judged as "Excellent", FIG. 1(b) is a schematic view showing a discharge state which is judged as "Good", FIG. 1(c) is a schematic view showing a discharge state which is judged as "Poor", and FIG. 1(d) is a view showing a discharge amount and time.

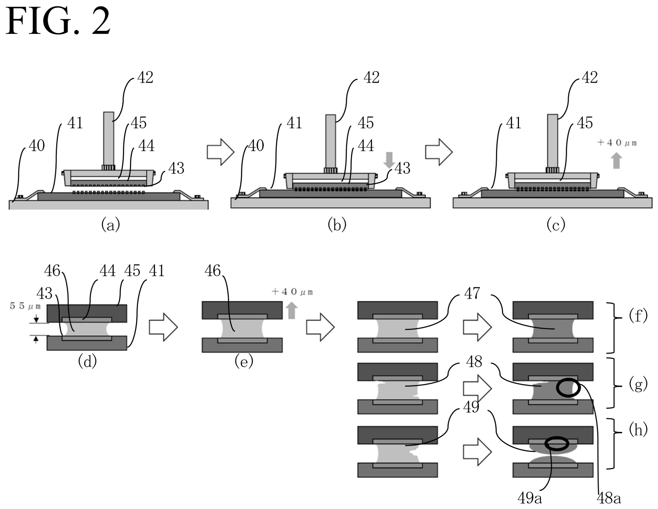

FIG. 2 is a schematic view showing a method for evaluating avoidance of an open defect of an LGA joint portion, FIG. 2(a) is a schematic view showing a state in which PKG is installed on a board, FIG. 2(b) is a schematic view showing a state in which PKG is brought into contact with a solder paste printed on a board and the temperature is also raised, FIG. 2(c) is a schematic view showing a state in which PKG is raised upward by 40 μm from the state in FIG. 2(b) in an environment of 190°C, FIG. 2(d) is a schematic partial cross-sectional view showing a region in the vicinity of a joint portion of a solder joint before the PKG is raised upward by 40 μm in FIG. 2(c), FIG. 2(e) is a schematic partial cross-sectional view showing a region in the vicinity of a joint portion of a solder joint in FIG. 2(c), FIG. 2(f) is a schematic partial cross-sectional view showing a state of the solder joint in which no defect occurs from the middle of solidification to the completion of solidification, FIG. 2(g) is a schematic partial cross-sectional view showing a state of the solder joint in which a hot tear phenomenon occurs from the middle of solidification to the completion of solidification, and FIG. 2(h) is a schematic partial cross-sectional view showing a state of the solder joint in which an open defect occurs due to the progress of a tear phenomenon from the middle of solidification to the completion of solidification.

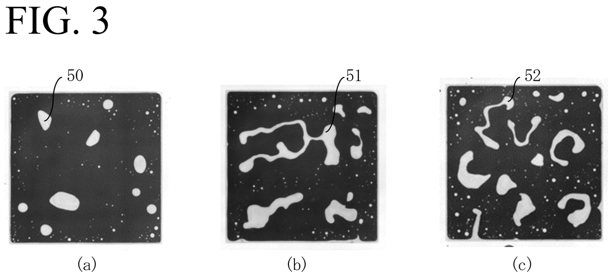

FIG. 3 is an X-ray transmission plan photograph of a solder joint after reflow at a peak temperature of 190°C, FIG. 3(a) is an X-ray transmission plan photograph of Example 3, FIG. 3(b) is an X-ray transmission plan photograph of Example 15, and FIG. 3(c) is an X-ray transmission plan photograph of Comparative Example 11.

Description of Embodiments

The present invention will be described in greater detail below. In this description, "%" relating to the solder alloy composition refers to "mass%" unless otherwise specified.

1. Solder Alloy

(1) Bi: 35.0 to 68.0%

Bi is an element necessary for lowering the melting point of the solder alloy. Since the Sn-Bi eutectic alloy has a low melting point of 139°C, Bi can lower the liquidus-line temperature of the solder alloy. In addition, a solder alloy containing a predetermined amount of Bi exhibits superplasticity, and exhibits excellent ductility. Therefore, the solder alloy containing a predetermined amount of Bi is excellent in ductility and shear strength.

When the Bi content is less than 35.0%, the liquidus-line temperature rises. In terms of the lower limit, the Bi content is 35.0% or more, preferably 41.0% or more, more preferably 48.0% or more, and still more preferably 56.0% or more.

On the other hand, when the Bi content is more than 68.0%, a large amount of hard, brittle and coarse Bi phase is precipitated, so that the solder alloy itself becomes hard, and ductility and shear strength are deteriorated. In addition, when the Bi content becomes extremely high, the melting point increases. Further, when a large amount of the Bi phase is precipitated, the surface state of the molten solder alloy becomes unstable, and an open defect occurs due to the droplet retainability and the progress of the tear phenomenon. In terms of the upper limit, the Bi content is 68.0% or less, preferably 65.0% or less, more preferably 63.0% or less, still more preferably 60.0% or less, and particularly preferably 58.0% or less.

In the present invention, the lower limit and the upper limit described above can be appropriately combined to be in the range of the Bi content. The preferred range of Bi is 48.0 to 60.0%.

(2) Sb: 0.1 to 2.0%

Sb contributes to improvement in ductility and heat cycle resistance, and is also an element necessary for suppressing generation of voids even when printing is performed as a paste over a wide area. Sb forms a solid solution in $\beta$-Sn by about 10% at about 200°C, but the solid solution limit of Sb decreases as the temperature decreases, and $\beta$-SnSb is precipitated with almost no solid solution at room temperature. $\beta$-SnSb precipitates around the Sn phase and the Bi phase during solidification and exerts a pinning effect, so that coarsening of each phase can be suppressed.

When the Sb content is less than 0.1%, ductility and heat cycle resistance cannot be improved. In terms of the lower limit, the Sb content is 0.1% or more, preferably 0.2% or more, more preferably 0.3% or more, still more preferably 0.4% or more, and particularly preferably 0.5% or more.

On the other hand, when the Sb content is more than 2.0%, $\beta$-SnSb is excessively precipitated, so that the melting point increases. Further, since coarse $\beta$-SnSb is formed, ductility decreases. Furthermore, when printing is performed as a paste over a wide area, a large amount of voids are generated. In terms of the upper limit, the Sb content is 2.0% or less, preferably 1.5% or less, more preferably 1.3% or less, still more preferably 1.2% or less, further more preferably 1.0% or less, particularly preferably 0.8% or less, and most preferably 0.7% or less.

In the present invention, the lower limit and the upper limit described above can be appropriately combined to be in the range of the Sb content. The preferred range of Sb is 0.4 to 1.2%.

(3) Ni: 0.010 to 0.050%

Ni is an element necessary for improving ductility and heat cycle resistance of the solder alloy. In addition, when an appropriate amount of Ge is simultaneously added, the Ge oxide film layer that is thin and has no unevenness homogenizes the surface structure of the molten solder alloy, so that droplet retainability is excellent, open defect due to the progress of tear phenomenon is suppressed, and further, generation of voids can be suppress even when printing is performed as a paste in a wide area.

When the Ni content is less than 0.010%, ductility and heat cycle resistance are poor. In terms of the lower limit, the Ni content is 0.010% or more, more preferably 0.012% or more, still more preferably 0.013% or more, particularly preferably 0.014% or more, and most preferably 0.015% or more.

On the other hand, when the Ni content is more than 0.050%, an open defect occurs due to the progress of the tear phenomenon when the Ge content is within the range described later, and when the Ni content is further increased, a large amount of voids are generated when printing is performed as a paste over a wide area. In terms of the upper limit, the Ni content is 0.050% or less, preferably 0.039% or less, more preferably 0.029% or less, still more preferably 0.019% or less, particularly preferably 0.018% or less, and most preferably 0.017% or less.

In the present invention, the lower limit and the upper limit described above can be appropriately combined to be in the range of the Ni content. The preferred range of Ni is 0.010 to 0.039%.

(4) Ge: 0.007 to 0.090%

Ge is an element that is suitable for a mounting process as a liquid and is necessary to exhibit an effect of improving bonding quality among various physical properties in a solder alloy. When the Ge content is an appropriate amount, the amount of the active component in the flux consumed for the reduction of the oxide of the solder powder is small, so that the reduction to the electrode surface is sufficiently performed. Therefore, even when printing is performed as a paste over a wide area, generation of voids can be suppressed. That is, the solder alloy according to the present invention needs to contain an appropriate amount of Ge in order to suppress wasteful consumption of the active component in the flux, rather than to contain Ge mainly to function as an oxidation inhibiting action.

In addition, it is necessary to accurately prepare the Ge content in order to stabilize the surface state of the molten solder alloy in addition to suppressing generation of voids that are unavoidable when printing is performed as a paste over a wide area as much as possible. When the Ge content is appropriate and the surface state of the molten solder alloy is stabilized, open defect due to the progress of the tear phenomenon can be suppressed. On the other hand, when a large amount of Ge is contained for stabilizing the surface state, generation of voids is promoted as described above. Therefore, in the Sn-Bi-Sb-Ni-Ge solder alloy according to the present invention, as described above, the Ge content, in addition to Bi, Sb, and Ni, needs to be within the above-described range.

When the Ge content is less than 0.007%, the surface state of the molten solder alloy becomes unstable, the droplet retainability is deteriorated, and an open defect occurs due to the accompanying progress of the tear phenomenon. In terms of the lower limit, the Ge content is 0.007% or more, preferably 0.009% or more, more preferably 0.010% or more, still more preferably 0.012% or more, further more preferably 0.013% or more, particularly preferably 0.014% or more, and most preferably 0.015% or more.

On the other hand, when the Ge content is more than 0.090%, a thick oxide film is formed, so that a large amount of voids are generated when printing is performed as a paste over a wide area. In terms of the upper limit, the Ge content is 0.090% or less, preferably 0.075% or less, more preferably 0.050% or less, still more preferably 0.030% or less, further more preferably 0.026% or less, particularly preferably 0.025% or less, and most preferably 0.024% or less, 0.022% or less, 0.020% or less, 0.018% or less, or 0.016% or less.

In the present invention, the lower limit and the upper limit described above can be appropriately combined to be in the range of the Ge content. The preferred range of Ge is 0.010 to 0.050%.

(5) The alloy composition further contains, by mass%, at least one of Co, Ti, Al, Mn, As, Fe, Pd, Zn, Zr, Pb, In, Ce, P, and Ga: 0.1% or less in total.

The solder alloy according to the present invention may contain optional elements within a range that does not impair the effects of the present invention. As long as these optional elements are 0.1% or less in total, the effects of the present invention are maintained. Among them, even when at least one of Co, Ti, Al, Mn, As, Fe, Pd, Zn, Zr, Pb, In, Ce, P, and Ga is contained in a total amount of 0.1% or less, the effect of the present invention is not particularly impaired. Among them, as for Co, As, Fe, Pd, Zr, Pb, Ce, and P, the effect of the present invention is particularly maintained as long as the content of at least one of these is 0.1% or less in total. A lower limit value is required to be 0.001% or more although not particularly limited.

(6) Relations (1) and (2)

$$0.0008 \leqq Bi \times Sb \times Ni \times Ge \leqq 0.0347 \qquad \text{Relation (1)}$$

$$34.7 \leqq (Bi \times Ni)/Ge \leqq 154.6 \qquad \text{Relation (2)}$$

in which in the Relations (1) and (2), Bi, Sb, Ni, and Ge each represent a content as mass% of the solder alloy.

The solder alloy according to the present invention preferably satisfies the Relations (1) and (2) because the solder alloy has better liquid physical properties while maintaining the solid physical properties of the Sn-Bi-Sb-Ni-Ge solder alloy. The technical significance of each relation is as follows.

Relation (1) represents a relationship for satisfying the solid physical properties and the liquid physical properties of the solder alloy at a higher level, and is a relation in which all the contents of essential elements are considered. Bi, Sb, and Ni are elements for improving the solid physical properties of the solder alloy, but in order to further improve the liquid physical properties, it is better to comprehensively consider the Ge content in addition to these. In the solder alloy, since the respective constituent elements are directly and indirectly related to each other, each effect is exhibited by a whole solder alloy as an integral body. Further, in order to exhibit more excellent liquid physical properties while maintaining solid physical properties in the Sn-Bi-Sb-Ni-Ge solder alloy, it is preferable to satisfy the Relation (1) in which the content of each constituent element is considered.

Specifically, Bi forms a eutectic structure with Sn and the melting point decrease, but if the Sb is too high in content, the liquidus-line temperature increases. In addition, Bi, Sb, and Ni contribute to ductility, Bi and Sb contribute to shear strength, and Sb and Ni contribute to heat cycle resistance. In addition, Bi, Ni, and Ge contribute to droplet retainability and suppression of open defects caused by progress of tear phenomenon. Sb, Ni, and Ge contribute to suppressing generation of voids when printing is performed as a paste over a wide area. As described above, since the respective constituent elements of the solder alloy according to the present invention contribute to each effect, it is preferable to satisfy the Relation (1).

In terms of the lower limit, the Relation (1) is preferably 0.0008 or more, more preferably 0.0017 or more, still more preferably 0.0028 or more, further more preferably 0.0030 or more, particularly preferably 0.0035 or more, and most preferably 0.0039 or more or 0.0044 or more.

In terms of the upper limit, the Relation (1) is preferably 0.0326 or less, more preferably 0.0317 or less, still more preferably 0.0290 or less, further more preferably 0.0261 or less, particularly preferably 0.0236 or less, most preferably 0.0218 or less, 0.0209 or less, 0.0174 or less, 0.0168 or less, 0.0157 or less, 0.0153 or less, 0.0122 or less, 0.0117 or less, 0.0109 or less, 0.0104 or less, 0.0096 or less, 0.0088 or less, 0.0087 or less, 0.0084 or less, 0.0070 or less, 0.0067 or less, 0.0065 or less, 0.0062 or less, 0.0061 or less, 0.0059 or less, 0.0057 or less, 0.0053 or less, 0.0052 or less, or 0.0046 or less.

In the present invention, the lower limit and the upper limit described above can be appropriately combined to be in the range of the Relation (1).

Relation (2) represents the relationship between the contents of Bi and Ni in which the droplet retainability deteriorates and an open defect also occurs when the upper limit is exceeded and the content of Ge in which the droplet retainability deteriorates and the open defect also occurs when the lower limit is exceeded. When Bi is high in content, the surface tension decreases, the surface oxidation rate increases, and the surface state of the molten solder alloy becomes unstable. In Ni, the surface state of the molten solder alloy becomes unstable due to precipitation of a large amount of $Ni_3Sn_4$. On the other hand, Ge can compensate for these unstable factors by forming a stable film on the surface of the molten solder alloy. Therefore, due to a low content of Ge, the surface state of the molten solder alloy becomes unstable. Further, in Bi, Ni, and Ge, in order to further suppress the open defect even within the range of the contents described above, it is preferable that the Bi and Ni contents and the Ge content exhibit an appropriate relationship represented by the Relation (2).

In terms of the lower limit, the Relation (2) is preferably 34.7 or more, more preferably 34.8 or more, still more preferably 36.3 or more, further more preferably 39.5 or more, particularly preferably 42.0 or more, most preferably 43.5 or more, 48.3 or more, 49.3 or more, 54.4 or more, 55.1 or more, 58.0 or more, 62.1 or more, 66.9 or more, 72.5 or more, 84.1 or more, or 87.0 or more.

In terms of the upper limit, the Relation (2) is preferably 154.6 or less, more preferably 145.0 or less, still more preferably 124.3 or less, particularly preferably 113.1 or less, and most preferably 96.7 or less.

In the present invention, the lower limit and the upper limit described above can be appropriately combined to be in the range of the Relation (2).

In the calculation of Relations (1) and (2), the numerical values as shown in Tables 1 and 2, which are measured values of the alloy composition, have been used. For the values calculated by the Relations (1) and (2), the Relation (1) calculates up to the fourth decimal place, and the Relation (2) calculates up to the first decimal place. This calculation rule is used in this application and further, is intended to be used as well for calculations relating to further solder alloys as described in other documents, etc., since all solder alloys must be handled in the same way.

(7) Balance: Sn

The balance of the solder alloy according to the present invention is Sn. In addition to the above-described elements, unavoidable impurity may be contained. The balance of the solder alloy according to the present invention may consist of Sn and unavoidable impurities. Even when unavoidable impurity is contained, it does not affect the above-described effects.

2. Solder Paste

A solder paste according to the present invention is a mixture of a solder powder consisting of the alloy composition described above and a flux. A flux to be used in the present invention is not particularly limited as long as soldering by an ordinary method is possible. Therefore, a flux appropriately blended with rosin, an organic acid, an activator, a thixotropic material, and a solvent which are generally used, may be used. Blending ratios of the metal powder component and the flux component in the present invention are preferably the metal powder component: 70 to 90 mass%, the flux component: 10 to 30 mass%, although not particularly limited.

3. Solder Ball

The solder alloy according to the present invention can be used as a solder ball. When the solder alloy is used as a solder ball, the solder ball can be produced from the solder alloy according to the present invention by using a dropping method as a common method in the industry. In addition, a solder joint can be produced by processing the solder ball using a common method in the industry such as a method in which one solder ball is mounted on one flux-applied electrode and joined. A grain size of the solder ball is preferably 1 μm or more, more preferably 10 μm or more, further preferably 20 μm or more, and particularly preferably 30 μm or more. An upper limit of the grain size of the solder ball is preferably 3000 μm or less, more preferably 1000 μm or less, further preferably 800 μm or less, and particularly preferably 600 μm or less.

4. Solder Joint

A solder joint according to the present invention is preferably used to join at least two or more of to-be-joined members. The to-be-joined members are not particularly limited as long as they are electrically connected by using the solder alloy according to the present invention, for example, devices, boards, electronic components, printed circuit boards, insulated boards, heat sinks, lead frames, semiconductor using electrode terminals and, power module, and inverter products, etc.

It is desirable as long as a joining method using the solder alloy according to the present invention is performed in the usual manner by using, for example, a reflow method. A melting temperature of the solder alloy when flow soldering is performed may be a temperature approximately 20°C higher than the liquidus-line temperature. Additionally, in the case of joining using the solder alloy according to the present invention, the alloy structure can be made finer taking a cooling rate for solidification into consideration. For example, a solder joint is cooled at a cooling rate of 2 to 3°C/s or more. Other joining conditions can be adjusted as appropriate according to the alloy composition of the solder alloy.

5. Other

The solder alloy according to the present invention can be used as a preform. A form of the preform is a washer, a ring, a pellet, a disc, a ribbon, a wire, etc.

Moreover, as the solder alloy according to the present invention, by using a low $\alpha$ dose material as a raw material, a low $\alpha$ dose alloy can be produced. Such a low $\alpha$ dose alloy can suppress a soft error when used for forming solder bumps around a memory.

[Examples]

The present invention will be described based on the following examples, however, the present invention is not limited to the following examples.

In order to verify the effects of the present invention, solder alloys described in Tables 1 and 2 were used to evaluate (Evaluation 1) Liquidus-Line Temperature, (Evaluation 2) Ductility, (Evaluation 3) Shear Strength, (Evaluation 4) TCT (Heat Cycle Resistance), (Evaluation 5) Droplet Retainability, (Evaluation 6) Avoiding Open Defect of LGA Joint Portion, and (Evaluation 7) Voids in Large-area Printed Portion.

(Evaluation 1) Liquidus-Line Temperature

Concerning the solder alloys having the respective alloy compositions described in Tables 1 and 2, their temperatures were obtained from the DSC curves, respectively. The DSC curve was obtained with a DSC (model number: Q2000) manufactured by TA Instruments Inc., by raising the temperature at 5 °C/min in the atmosphere. From the obtained DSC curve, a liquidus-line temperature was obtained and defined as a melting temperature. When the liquidus-line temperature was 185°C or less, it was judged as "Good". When the liquidus-line temperature is more than 185°C, it was judged as "Poor".

(Evaluation 2) Ductility

The ductility was measured according to JISZ3198-2. For the solder alloys having the respective alloy compositions described in Tables 1 and 2, a test piece having a gauge length of 30 mm and a diameter of 8 mm was prepared by casting the solder alloys into a mold. The prepared test piece was pulled with a stroke of 0.6 mm/min at room temperature by Type 5966 manufactured by Instron Corporation, and the elongation (ductility) when the test piece was broken was measured. In the present example, when the ductility was 80% or more, it was judged as a level that could cope with future downsizing of the electronic device and judged as "Good", and when the ductility was less than 80%, it was judged as "Poor".

(Evaluation 3) Shear Strength

The solder alloys having respective alloy compositions described in Tables 1 and 2 were atomized to obtain solder powder (particle size: 20 to 32 $\mu$m). A soldering flux (manufactured by SENJU METAL INDUSTRY CO., LTD., product name: 155HF) containing rosin, a solvent, an activator, a thixotropic agent, an organic acid, etc., was mixed to prepare a solder paste of each solder alloy. In this solder paste, the solder powder was 90% with respect to the total mass of the solder paste. The solder paste was printed on a Cu electrode of a printed circuit board (material: FR-4) having a thickness of 0.8 mm with a metal mask having a thickness of 120 $\mu$m, then a BGA component was mounted with a mounter, and reflow-soldered under conditions of a maximum temperature of 190°C and a retention time of 60 seconds to prepare a test board.

The shear strength (N) of the test board was measured with a shear strength measuring device (STR-1000 manufactured by RHESCA CO., LTD.) under the condition of 6 mm/min. When the shear strength was 60.00 N or more, it was judged to be a level that could be used without any practical problem, and judged as "Good", and when the shear strength was less than 60.00 N, it was judged as "Poor".

(Evaluation 4) TCT (Heat Cycle Resistance)

The solder paste prepared in Evaluation 3 was printed on a Cu electrode subjected to OSP treatment with a metal mask having a thickness of 100 $\mu$m on a printed circuit board (material: FR-4) having a thickness of 0.8 mm, and then BGA components of 15 pieces were mounted with a mounter and subjected to reflow soldering under the conditions of a maximum temperature of 190°C and a retention time of 60 seconds to prepare a test board.

The test board soldered with each solder alloy was placed in a heat cycle test apparatus set under conditions of a low temperature of -40°C, a high temperature +125°C, and a retention time of 10 minutes, and the number of cycles at the time when the resistance value of at least one BGA component exceeded 15 $\Omega$ from a range of 3 to 5 $\Omega$ as an initial resistance value was determined. 1700 cycles or more were judged as "Good", and less than 1700 cycles were judged as "Poor".

Evaluation results are shown in Table 1.

(Evaluation 5) Droplet Retainability

- Evaluation for Droplet Separability of Molten Alloy

A solder alloy having each alloy composition described in Tables 1 and 2 was cast, and an alloy piece having a diameter of 3 mm and a length of 4 cm was prepared by cutting and polishing processes. The prepared alloy piece was melted in a syringe of a surface tensiometer (Dmo-501 manufactured by Kyowa Interface Science Co., Ltd.), and the droplet separability in a molten state was evaluated using a pendant drop method in which a molten solder alloy was discharged from the tip of the syringe in an air environment at 190°C.

As shown in FIG. 1(d), the molten solder alloy was discharged at 1.0 $\mu$l/s from a state where there was no droplet of the molten solder alloy at the tip of the syringe. Since the droplet of the molten solder alloy in which the balance between the surface tension and the gravity of the droplet is lost falls from the syringe tip, the time from when 5 $\mu$l or more in total was supplied until the droplet was separated from the syringe tip was evaluated.

As shown in FIGS. 1(a) and 1(d), when a droplet 10 of the molten solder alloy was not separated from a syringe tip 11 for 5 seconds or more, it was judged as "Excellent". As shown in FIGS. 1(b) and 1(d), when a droplet 20 of the molten solder alloy was not separated from a syringe tip 21 for 1 second or more and less than 5 seconds, it was judged as "Good". As shown in FIGS. 1(c) and 1(d), when a droplet 30 of the molten solder alloy was separated from a syringe tip 31 in less than 1 second, it was judged as "Poor".

(Evaluation 6) Avoiding Open Defect of LGA Joint Portion

Using a metal mask having an opening diameter of 0.24 mm, a paste printed portion was formed on a test board with a solder paste prepared in the same manner as in Evaluation 3. Thereafter, as shown in FIG. 2(a), a board 41 was placed in a solderability tester (manufactured by RHESCA CO., LTD., product name: 5200TN). The solderability tester includes a heating stage 40 that is vertically driven and a holding arm 42 of the PKG. A PKG 45 having an LGA electrode 44 having an opening portion of the same pattern as that of a paste printed portion 43 was held at the tip of the holding arm 42. Then, as shown in FIG. 2(b), the holding arm 42 was lowered to a position where the distance between the electrodes of the PKG 45 and the board 41 was 55 $\mu$m, and the paste printed portion 43 was moved to a position where the paste printed portion 43 was in contact with the LGA electrode 44 of the PKG 45, then the temperature of the heating stage was raised to 190°C, and the heating stage was held for 30 seconds.

After it was confirmed that the paste printed portion 43 was melted and the board and the electrode of the PKG were connected by the molten solder, as shown in FIG. 2(c), the holding arm 42 holding the PKG 45 was moved upward by 40 $\mu$m, and the distance between the board 41 and the PKG 45 was separated (distance: 95 $\mu$m) and cooled to room temperature. Curing with an epoxy resin and vertical cross-section polishing were performed on the board 41 after mounting, and the formation state of the solder joint was observed with an electron microscope. LGA joint portions of 18 pieces were observed from one polishing plane.

As shown in FIG. 2(f), when there were no various defects in a solder alloy 47, it was judged as "Excellent". As shown in FIG. 2(g), even when a solder alloy 48 has a hot tear 48a as a shrinkage cavity from the side surface, the electrical connection is not lost, and thus the solder alloy 48 was judged as "Good". As shown in FIG. 2(h), when a solder alloy 49 had an open defect 49a and lost electrical connection, the solder alloy 49 was judged as "Poor".

(Evaluation 7) Voids in Large-area Printed Portion

A solder paste was prepared in the same manner as in Evaluation 6. Using a metal mask having an opening of 5 mm square, a paste printed portion was formed on a test board so as to have a thickness of 0.12mm$^t$, and then a QFP component similarly having a die bond region of 5 mm square was implemented on the test board by a mounter, and reflow was performed in which the QFP component was held at a peak temperature of 190°C for 90 seconds, and a solder joint was formed.

An X-ray transmission plan photograph of the sample after mounting was taken at a magnification of 25 using a micro-focus X-ray system (model number: XVR-160) of Uni-Hite System CO., LTD., and a void residual state was observed. In the X-ray transmission plan photographs of 6 samples, the ratio of the area of voids to the area of the solder joint (((area of voids)/(area of solder joint)) $\times$100 (%)) was determined, and the average of 6 samples was taken as the average void area ratio. When the average void area ratio was 10% or less, it was judged as "Excellent", when the average void area ratio was more than 10% and less than 20%, it was judged as "Good", and when the average void area ratio was 20% or more, it was judged as "Poor".

The evaluation results are shown in Tables 1 and 2.

Table 1]

| | | Alloy Composition (mass%) | | | | | Relation (1) | Relation (2) | Evaluation1 | | Evaluation2 | Evaluation3 | Evaluation4 | Evaluation5 | Evaluation6 | Evaluation7 | Overall Evaluation |
|---|---|---|---|---|---|---|---|---|---|---|---|---|---|---|---|---|---|
| | Sn | Bi | Sb | Ni | Ge | Optional Element | | | Liquidus line [°C] | Evaluation | Ductility | Shear Strength | TCT | Droplet Retainability | Avoiding Tear Defect of LGA Joint Portion | Voids in Large-area Printed Portion | |
| Example1 | bal. | 58.0 | 0.5 | 0.015 | 0.007 | | 0.0030 | 124.3 | 141.02 | Good | Good | Good | Good | Excellent | Excellent | Excellent | Excellent |
| Example2 | bal. | 58.0 | 0.5 | 0.015 | 0.009 | | 0.0039 | 96.7 | 141.08 | Good | Good | Good | Good | Excellent | Excellent | Excellent | Excellent |
| Example3 | bal. | 58.0 | 0.5 | 0.015 | 0.010 | | 0.0044 | 87.0 | 141.05 | Good | Good | Good | Good | Excellent | Excellent | Excellent | Excellent |
| Example4 | bal. | 58.0 | 0.5 | 0.015 | 0.01 2 | | 0.0052 | 72.5 | 141.12 | Good | Good | Good | Good | Excellent | Excellent | Excellent | Excellent |
| Example5 | bal. | 58.0 | 0.5 | 0.015 | 0.013 | | 0.0057 | 66.9 | 141.07 | Good | Good | Good | Good | Excellent | Excellent | Excellent | Excellent |
| Example6 | bal. | 58.0 | 0.5 | 0.015 | 0.014 | | 0.0061 | 62.1 | 141.20 | Good | Good | Good | Good | Excellent | Excellent | Excellent | Excellent |
| Example7 | bal. | 58.0 | 0.5 | 0.015 | 0.015 | | 0.0065 | 58.0 | 141.29 | Good | Good | Good | Good | Excellent | Excellent | Excellent | Excellent |
| Example8 | bal. | 58.0 | 0.5 | 0.015 | 0.016 | | 0.0070 | 54.4 | 141.25 | Good | Good | Good | Good | Excellent | Excellent | Excellent | Excellent |
| Example9 | bal. | 58.0 | 0.5 | 0.015 | 0.018 | | 0.0078 | 48.3 | 141.20 | Good | Good | Good | Good | Excellent | Excellent | Excellent | Excellent |
| Example10 | bal. | 58.0 | 0.5 | 0.015 | 0.020 | | 0.0087 | 43.5 | 141.29 | Good | Good | Good | Good | Excellent | Excellent | Excellent | Excellent |
| Example11 | bal. | 58.0 | 0.5 | 0.015 | 0.022 | | 0.0096 | 39.5 | 141.11 | Good | Good | Good | Good | Excellent | Excellent | Excellent | Excellent |
| Example12 | bal. | 58.0 | 0.5 | 0.015 | 0.024 | | 0.0104 | 36.3 | 141.19 | Good | Good | Good | Good | Excellent | Excellent | Excellent | Excellent |
| Example13 | bal. | 58.0 | 0.5 | 0.015 | 0.025 | | 0.0109 | 34.8 | 141.22 | Good | Good | Good | Good | Excellent | Excellent | Excellent | Excellent |
| Example14 | bal. | 58.0 | 0.5 | 0.018 | 0.030 | | 0.0157 | 34.8 | 141.23 | Good | Good | Good | Good | Excellent | Excellent | Excellent | Excellent |
| Example15 | bal. | 58.0 | 0.5 | 0.015 | 0.050 | | 0.0218 | 17.4 | 141.09 | Good | Good | Good | Good | Excellent | Excellent | Good | Good |
| Example16 | bal. | 58.0 | 0.5 | 0.015 | 0.075 | | 0.0326 | 11.6 | 141.18 | Good | Good | Good | Good | Excellent | Excellent | Good | Good |
| Example17 | bal. | 58.0 | 0.5 | 0.015 | 0.090 | | 0.0392 | 9.7 | 141.12 | Good | Good | Good | Good | Excellent | Excellent | Good | Good |
| Example18 | bal. | 35.0 | 0.5 | 0.015 | 0.090 | | 0.0236 | 5.8 | 183.02 | Good | Good | Good | Good | Excellent | Good | Excellent | Good |
| Example19 | bal. | 35.0 | 0.5 | 0.015 | 0.020 | | 0.0053 | 26.3 | 184.21 | Good | Good | Good | Good | Excellent | Good | Excellent | Good |
| Example20 | bal. | 41.0 | 0.5 | 0.015 | 0.020 | | 0.0062 | 30.8 | 173.01 | Good | Good | Good | Good | Excellent | Good | Excellent | Good |
| Example21 | bal. | 48.0 | 0.5 | 0.014 | 0.020 | | 0.0067 | 33.6 | 169.26 | Good | Good | Good | Good | Excellent | Good | Excellent | Good |
| Example22 | bal. | 56.0 | 0.5 | 0.015 | 0.020 | | 0.0084 | 42.0 | 140.95 | Good | Good | Good | Good | Excellent | Excellent | Excellent | Excellent |
| Example23 | bal. | 60.0 | 0.5 | 0.015 | 0.026 | | 0.0117 | 34.6 | 143.42 | Good | Good | Good | Good | Good | Good | Good | Good |
| Example24 | bal. | 68.0 | 0.5 | 0.015 | 0.030 | | 0.0153 | 34.0 | 168.44 | Good | Good | Good | Good | Good | Good | Good | Good |
| Example25 | bal. | 68.0 | 0.5 | 0.015 | 0.090 | | 0.0459 | 11.3 | 169.11 | Good | Good | Good | Good | Good | Good | Good | Good |

| | Alloy Composition (mass%) | | | | | | Relation (1) | Relation (2) | Evaluation1 | | Evaluation2 | Evaluation3 | Evaluation4 | Evaluation5 | Evaluation6 | Evaluation7 | |
| | Sn | Bi | Sb | Ni | Ge | Optional Element | | | Liquidus line [°C] | Evaluation | Ductility | Shear Strength | TCT | Droplet Retainability | Avoiding Tear Defect of LGA Joint Portion | Voids in Large-area Printed Portion | Overall Evaluation |
|---|---|---|---|---|---|---|---|---|---|---|---|---|---|---|---|---|---|
| Example26 | bal. | 58.0 | 0.1 | 0.015 | 0.020 | | 0.0017 | 43.5 | 140.19 | Good | Good | Good | Good | Excellent | Excellent | Excellent | Excellent |
| Example27 | bal. | 58.0 | 0.2 | 0.015 | 0.020 | | 0.0035 | 43.5 | 139.66 | Good | Good | Good | Good | Excellent | Excellent | Excellent | Excellent |
| Example28 | bal. | 58.0 | 0.3 | 0.015 | 0.020 | | 0.0052 | 43.5 | 140.24 | Good | Good | Good | Good | Excellent | Excellent | Excellent | Excellent |
| Example29 | bal. | 58.0 | 0.4 | 0.015 | 0.020 | | 0.0070 | 43.5 | 140.43 | Good | Good | Good | Good | Excellent | Excellent | Excellent | Excellent |
| Example30 | bal. | 58.0 | 0.7 | 0.015 | 0.020 | | 0.0122 | 43.5 | 141.28 | Good | Good | Good | Good | Excellent | Excellent | Excellent | Excellent |
| Example31 | bal. | 58.0 | 1.0 | 0.015 | 0.020 | | 0.0174 | 43.5 | 141.23 | Good | Good | Good | Good | Excellent | Excellent | Excellent | Excellent |
| Example32 | bal. | 58.0 | 1.2 | 0.015 | 0.020 | | 0.0209 | 43.5 | 142.22 | Good | Good | Good | Good | Excellent | Excellent | Excellent | Excellent |
| Example33 | bal. | 58.0 | 1.5 | 0.015 | 0.020 | | 0.0261 | 43.5 | 143.36 | Good | Good | Good | Good | Excellent | Excellent | Excellent | Excellent |
| Example34 | bal. | 58.0 | 2.0 | 0.015 | 0.020 | | 0.0348 | 43.5 | 143.55 | Good | Good | Good | Good | Excellent | Excellent | Good | Good |
| Example35 | bal. | 58.0 | 0.5 | 0.010 | 0.016 | | 0.0046 | 36.3 | 141.05 | Good | Good | Good | Good | Excellent | Excellent | Excellent | Excellent |
| Example36 | bal. | 58.0 | 0.2 | 0.012 | 0.020 | | 0.0028 | 34.8 | 140.26 | Good | Good | Good | Good | Excellent | Excellent | Excellent | Excellent |
| Example37 | bal. | 58.0 | 0.3 | 0.017 | 0.020 | | 0.0059 | 49.3 | 140.63 | Good | Good | Good | Good | Excellent | Excellent | Excellent | Excellent |
| Example38 | bal. | 58.0 | 0.4 | 0.019 | 0.020 | | 0.0088 | 55.1 | 140.43 | Good | Good | Good | Good | Excellent | Excellent | Excellent | Excellent |

EP 4 763 410 A1

[Table 2]

| | Alloy Composition (mass%) | | | | | | Relation (1) | Relation (2) | Evaluation1 | | Evaluation2 | Evaluation3 | Evaluation4 | Evaluation5 | Evaluation6 | Evaluation7 | Overall Evaluation |
| --- | --- | --- | --- | --- | --- | --- | --- | --- | --- | --- | --- | --- | --- | --- | --- | --- | --- |
| | Sn | Bi | Sb | Ni | Ge | Optional Element | | | Liquidus line [°C] | Evalua tion | Ductility | Shear Strength | TCT | Droplet Retainability | Avoiding Tear Defect of LGA Joint Portion | Voids in Large-area Printed Portion | |
| Example39 | bal. | 58.0 | 0.5 | 0.029 | 0.020 | | 0.0168 | 84.1 | 140.81 | Good | Good | Good | Good | Excellent | Excellent | Excellent | Excellent |
| Example40 | bal. | 58.0 | 0.7 | 0.039 | 0.020 | | 0.0317 | 113.1 | 141.23 | Good | Good | Good | Good | Excellent | Excellent | Excellent | Excellent |
| Example41 | bal. | 58.0 | 0.5 | 0.050 | 0.020 | | 0.0290 | 145.0 | 142.21 | Good | Good | Good | Good | Excellent | Excellent | Excellent | Excellent |
| Example42 | bal. | 58.0 | 0.5 | 0.050 | 0.020 | Co:0.05 | 0.0290 | 145.0 | 141.00 | Good | Good | Good | Good | Excellent | Excellent | Excellent | Excellent |
| Example43 | bal. | 58.0 | 0.5 | 0.050 | 0.020 | Ti:0.05 | 0.0290 | 145.0 | 141.15 | Good | Good | Good | Good | Excellent | Excellent | Good | Good |
| Example44 | bal. | 58.0 | 0.5 | 0.050 | 0.020 | Al:0.05 | 0.0290 | 145.0 | 142.21 | Good | Good | Good | Good | Excellent | Excellent | Good | Good |
| Example45 | bal. | 58.0 | 0.5 | 0.050 | 0.020 | Mn:0.05 | 0.0290 | 145.0 | 141.61 | Good | Good | Good | Good | Excellent | Excellent | Good | Good |
| Example46 | bal. | 58.0 | 0.5 | 0.050 | 0.020 | As:0.05 | 0.0290 | 145.0 | 141.29 | Good | Good | Good | Good | Excellent | Excellent | Excellent | Excellent |
| Example47 | bal. | 58.0 | 0.5 | 0.050 | 0.020 | Fe:0.05 | 0.0290 | 145.0 | 142.46 | Good | Good | Good | Good | Excellent | Excellent | Excellent | Excellent |
| Example48 | bal. | 58.0 | 0.5 | 0.050 | 0.020 | Pd:0.05 | 0.0290 | 145.0 | 142.07 | Good | Good | Good | Good | Excellent | Excellent | Excellent | Excellent |
| Example49 | bal. | 58.0 | 0.5 | 0.050 | 0.020 | Zn:0.05 | 0.0290 | 145.0 | 141.03 | Good | Good | Good | Good | Excellent | Excellent | Good | Good |
| Example50 | bal. | 58.0 | 0.5 | 0.050 | 0.020 | Zr:0.05 | 0.0290 | 145.0 | 141.14 | Good | Good | Good | Good | Excellent | Excellent | Excellent | Excellent |
| Example51 | bal. | 58.0 | 0.5 | 0.050 | 0.020 | Pb:0.05 | 0.0290 | 145.0 | 140.82 | Good | Good | Good | Good | Excellent | Excellent | Excellent | Excellent |
| Example52 | bal. | 58.0 | 0.5 | 0.050 | 0.020 | In:0.05 | 0.0290 | 145.0 | 140.45 | Good | Good | Good | Good | Excellent | Excellent | Good | Good |
| Example53 | bal. | 58.0 | 0.5 | 0.050 | 0.020 | Ce:0.05 | 0.0290 | 145.0 | 141.23 | Good | Good | Good | Good | Excellent | Excellent | Excellent | Excellent |
| Example54 | bal. | 58.0 | 0.5 | 0.050 | 0.020 | P:0.05 | 0.0290 | 145.0 | 141.25 | Good | Good | Good | Good | Excellent | Excellent | Excellent | Excellent |
| Example55 | bal. | 58.0 | 0.5 | 0.050 | 0.020 | Ga:0.05 | 0.0290 | 145.0 | 139.97 | Good | Good | Good | Good | Excellent | Excellent | Good | Good |

(continued)

| | Alloy Composition (mass%) | | | | | | Relation (1) | Relation (2) | Evaluation1 | | Evaluation2 | Evaluation3 | Evaluation4 | Evaluation5 | Evaluation6 | Evaluation7 | Overall Evaluation |
| | Sn | Bi | Sb | Ni | Ge | Optional Element | | | Liquidus line [°C] | Evaluation | Ductility | Shear Strength | TCT | Droplet Retainability | Avoiding Tear Defect of LGA Joint Portion | Voids in Large-area Printed Portion | |
|---|---|---|---|---|---|---|---|---|---|---|---|---|---|---|---|---|---|
| Example56 | bal. | 58.0 | 0.5 | 0.050 | 0.020 | Co:0.008, Ti0.001, Al:0.001, Mn:0.002, As:0.01; Fe:0.005, Pd:0.003, Zn:0.002, Zr:0.004, Pb:0.005, In:0.005, Ce:0.004, P:0.003, Ga:0.004 | 0.0290 | 145.0 | 141.88 | Good | Good | Good | Good | Excellent | Excellent | Excellent | Excellent |
| Comparative Example1 | bal. | 34.0 | 0.7 | 0.015 | 0.020 | | 0.0071 | 25.5 | 186.46 | Poor | Good | Good | Good | Good | Good | Excellent | Poor |
| Comparative Example2 | bal. | 69.0 | 0.5 | 0.015 | 0.030 | | 0.0155 | 34.5 | 170.24 | Good | Poor | Poor | Good | Poor | Poor | Good | Poor |
| Comparative Example3 | bal. | 58.0 | 0.04 | 0.015 | 0.020 | | 0.0007 | 43.5 | 140.02 | Good | Poor | Good | Poor | Excellent | Excellent | Excellent | Poor |
| Comparative Example4 | bal. | 58.0 | 2.1 | 0.015 | 0.020 | | 0.0365 | 43.5 | 186.00 | Poor | Poor | Good | Good | Good | Good | Poor | Poor |
| Comparative Example5 | bal. | 58.0 | 0.5 | 0.004 | 0.020 | | 0.0023 | 11.6 | 141.41 | Good | Poor | Good | Poor | Excellent | Excellent | Good | Poor |
| Comparative Example6 | bal. | 58.0 | 0.4 | 0.055 | 0.010 | | 0.0128 | 319.0 | 142.56 | Good | Good | Good | Good | Poor | Poor | Good | Poor |
| Comparative Example7 | bal. | 58.0 | 0.5 | 0.060 | 0.020 | | 0.0348 | 174.0 | 143.86 | Good | Poor | Good | Good | Poor | Poor | Poor | Poor |
| Comparative Example8 | bal. | 58.0 | 0.5 | 0.020 | | | 0.0000 | - | 141.12 | Good | Good | Good | Good | Poor | Poor | Excellent | Poor |

(continued)

| | Alloy Composition (mass%) | | | | | | Relation (1) | Relation (2) | Evaluation1 | | Evaluation2 | Evaluation3 | Evaluation4 | Evaluation5 | Evaluation6 | Evaluation7 | Overall Evaluation |
|---|---|---|---|---|---|---|---|---|---|---|---|---|---|---|---|---|---|
| | Sn | Bi | Sb | Ni | Ge | Optional Element | | | Liquidus line [°C] | Evalua tion | Ductility | Shear Strength | TCT | Droplet Retainability | Avoiding Tear Defect of LGA Joint Portion | Voids in Large-area Printed Portion | |
| * Underlined indicates that it is outside the scope of the present invention. | | | | | | | | | | | | | | | | | |
| Comparative Example9 | bal. | 58.0 | 0.5 | 0.030 | 0.005 | | 0.0044 | 348.0 | 141.21 | Good | Good | Good | Good | Poor | Poor | Excellent | Poor |
| Comparative Example10 | bal. | 58.0 | 0.5 | 0.016 | 0.006 | | 0.0028 | 154.7 | 141.00 | Good | Good | Good | Good | Poor | Poor | Excellent | Poor |
| Comparative Example1 1 | bal. | 58.0 | 0.5 | 0.015 | 0.100 | | 0.0435 | 8.7 | 141.20 | Good | Good | Good | Good | Good | Good | Poor | Poor |
| Comparative Example12 | bal. | 58.0 | 0.8 | 0.030 | 0.100 | | 0.1392 | 17.4 | 145.91 | Good | Good | Good | Good | Good | Good | Poor | Poor |
| * Underlined indicates that it is outside the scope of the present invention. | | | | | | | | | | | | | | | | | |

As shown in Tables 1 and 2, in Example 1 to 56, the contents of Bi, Sb, Ni, and Ge, which are essential elements, were all within the scope of the present invention, and therefore all the evaluation determinations were "Good" or "Excellent". In particular, Examples 1 to 14, 22, 26 to 33, and 35 to 41 that satisfy the Relations (1) and (2), Examples 42, 46 to 48, 50, 51, 53, and 54 that satisfy the Relations (1) and (2) and also contain each of Co, As, Fe, Pd, Zr, Pb, Ce, and P, and Example 56 that contains all the optional elements contained in the solder alloys of Examples 42 to 55 all had a highest results in all the evaluation determinations, and showed superior results among the Examples.

It is presumed that among Examples 42 to 52, Ti in Example 43, Al in Example 44, Mn in Example 45, Zn in Example 49, In in Example 52, and Ga in Example 55 formed relatively thick oxide films, and the reduction components in the flux were slightly consumed, so that the reduction of the solder powder and the electrode surface was slightly insufficient as compared with Examples judged as "Excellent", and as a result, the area ratio of voids was slightly increased. Therefore, in these examples, the Evaluation 6 was "Good". However, these examples showed results far superior to comparative examples.

On the other hand, in Comparative Example 1, due to a low content of Bi, the liquidus-line temperature increased. In Comparative Example 2, due to a high content of Bi, ductility, shear strength, droplet retainability, and avoidance of open defects were poor.

In Comparative Example 3, due to a low content of Sb, ductility and TCT were poor. In Comparative Example 4, due to a high content of Sb, the liquidus-line temperature increased, ductility, and voids in the large-area printed portion were poor.

In Comparative Example 5, due to a low content of Ni, ductility and TCT were poor.

In Comparative Examples 6 and 7, due to a high content of Ni, the droplet retainability and the avoidance of open defects were poor. In particular, in Comparative Example 7, due to a higher content of Ni than that in Comparative Example 6, ductility and voids in a large-area printed portion were further poor.

In Comparative Example 8 to 10, since Ge was not contained or due to a low content of Ge, the droplet retainability and the avoidance of open defects were poor. In Comparative Example 11 and Comparative Example 12, due to a high content of Ge, voids of the large-area printed portion were poor.

The results of observing the X-ray transmission plan photographs of Example 3, Example 15, and Comparative Example 11 in Tables 1 and 2 are shown. FIG. 3 is an X-ray transmission plan photograph of a solder joint after reflow at a peak temperature of 190°C, FIG. 3(a) is an X-ray transmission plan photograph of Example 3, FIG. 3(b) is an X-ray transmission plan photograph of Example 15, and FIG. 3(c) is an X-ray transmission plan photograph of Comparative Example 11. As shown in FIGS. 3(a) and 3(b), it was found that in Example 3 and Example 15, the average void area ratio was less than 20%, and the generation of voids 50 and 51 was reduced. In particular, in Example 3, the average void area ratio was 10% or less, and the generation of voids 50 was reduced at a high level.

Reference Signs List

10, 20, 30 Droplets of molten solder alloy
11, 21, 31 Syringe tip
40 Heating stage
41 Board
42 Holding arm
43 (Solder) Paste
44 LGA electrode
45 PKG
46 to 49 Solder alloy
48a (Hot) Tear phenomenon
49a Open defect
50 to 52 Void

**Claims**

1. A solder alloy having an alloy composition consisting of, by mass%,

Bi: 35.0 to 68.0%,
Sb: 0.1 to 2.0%,
Ni: 0.010 to 0.050%,

Ge: 0.007 to 0.090%, with the balance being Sn.

2. The solder alloy according to claim 1, wherein the alloy composition further comprises, by mass%, at least one of Co, As, Fe, Pd, Zr, Pb, Ce, and P: 0.1% or less in total.

3. The solder alloy according to claim 1, wherein the alloy composition further comprises, by mass%, at least one of Co, Ti, Al, Mn, As, Fe, Pd, Zn, Zr, Pb, In, Ce, P, and Ga: 0.1% or less in total.

4. The solder alloy according to claim 1 or 2, wherein the alloy composition satisfies the following Relations (1) and (2):

$$0.0008 \leqq Bi \times Sb \times Ni \times Ge \leqq 0.0347 \qquad \text{Relation (1)}$$

$$34.7 \leqq (Bi \times Ni)/Ge \leqq 154.6 \qquad \text{Relation (2)}$$

wherein Bi, Sb, Ni, and Ge in the Relations (1) and (2) above each represent the content as mass% thereof in the solder alloy.

5. A solder paste comprising the solder alloy according to claim 1 or 3.

6. A solder ball consisting of the solder alloy according to claim 1 or 3.

7. A solder joint comprising the solder alloy according to claim 1 or 3.

8. The solder alloy according to claim 3, wherein the alloy composition satisfies the following Relations (1) and (2):

$$0.0008 \leqq Bi \times Sb \times Ni \times Ge \leqq 0.0347 \qquad \text{Relation (1)}$$

$$34.7 \leqq (Bi \times Ni)/Ge \leqq 154.6 \qquad \text{Relation (2)}$$

wherein Bi, Sb, Ni, and Ge in the Relations (1) and (2) above each represent the content as mass% thereof in the solder alloy.

# FIG. 1

DISCHARGE
AMOUNT
[μl]

(d)

TIME [s]

# FIG. 2

FIG. 3

(a)　　　　　　　　(b)　　　　　　　　(c)

## EUROPEAN SEARCH REPORT

**Application Number**

EP 25 21 1774

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/376608 A1 (YOKOYAMA TAKAHIRO [JP] ET AL) 3 December 2020 (2020-12-03) * paragraphs [0024] - [0027]; example 17; table 1 * ----- | 1-8 | INV. B23K35/02 B23K35/26 C22C11/10 C22C13/02 |
| A | WO 2023/243108 A1 (TAMURA SEISAKUSHO KK [JP]) 21 December 2023 (2023-12-21) * the whole document * ----- | 1-8 | |

**TECHNICAL FIELDS SEARCHED (IPC)**

B23K
C22C

The present search report has been drawn up for all claims

| Place of search | Date of completion of the search | Examiner |
|---|---|---|
| The Hague | 31 March 2026 | Martinavicius, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                          
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 1774

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2026

| Patent document cited in search report | Publication date | Patent family member(s) | Publication date |
|---|---|---|---|
| US 2020376608 A1 | 03-12-2020 | BR 112020005521 A2 | 18-08-2020 |
| | | CN 111182999 A | 19-05-2020 |
| | | EP 3666453 A1 | 17-06-2020 |
| | | ES 2915198 T3 | 21-06-2022 |
| | | HR P20220954 T1 | 28-10-2022 |
| | | HU E059266 T2 | 28-11-2022 |
| | | JP 6477965 B1 | 06-03-2019 |
| | | JP 2019155471 A | 19-09-2019 |
| | | KR 20200036948 A | 07-04-2020 |
| | | MX 391544 B | 21-03-2025 |
| | | MY 194455 A | 30-11-2022 |
| | | PH 12020551402 A1 | 01-09-2021 |
| | | PL 3666453 T3 | 16-08-2022 |
| | | PT 3666453 T | 19-05-2022 |
| | | TW 201940275 A | 16-10-2019 |
| | | US 2020376608 A1 | 03-12-2020 |
| | | WO 2019171978 A1 | 12-09-2019 |
| WO 2023243108 A1 | 21-12-2023 | JP 7148761 B1 | 05-10-2022 |
| | | JP WO2023243108 A1 | 21-12-2023 |
| | | WO 2023243108 A1 | 21-12-2023 |

EPO FORM P0459

For more details about this annex : see Official Journal of the European Patent Office, No. 12/82

**EP 4 763 410 A1**

**REFERENCES CITED IN THE DESCRIPTION**

**Patent documents cited in the description**

- JP 6477965 B